# EUROPEAN PATENT SPECIFICATION

(11) **EP 2 439 377 B1**
(45) Date of publication and mention of the grant of the patent: **11.05.2016**
(21) Application number: 11184159.9
(22) Date of filing: 06.10.2011
(51) Int. Cl.: F01D 5/28, F01D 5/18

(54) **Method of making a cooling hole of a turbine blade**
Verfahren zur Herstellung eines Kühllochs einer Turbinenschaufel
Procédé pour l'usinage d'un trou de refroidissement d'une aube de turbine

(30) Priority: 07.10.2010 JP 2010227128
(43) Date of publication of application: 11.04.2012
(73) Proprietor: Mitsubishi Hitachi Power Systems, Ltd., Yokohama 220-8401 (JP)
(72) Inventor: Arikawa, Hideyuki, Tokyo 100-8220 (JP); Mebata, Akira, Tokyo 100-8220 (JP); Kojima, Yoshitaka, Tokyo 100-8220 (JP); Ichikawa, Kunihiro, Tokyo 100-8220 (JP); Izumi, Takeshi, Tokyo 100-8220 (JP)
(74) Representative: Beetz & Partner mbB

(56) References cited:
- EP-A2- 1 091 090
- US-A1- 2008 057 271
- US-A1- 2009 220 349
- US-A1- 2009 311 416
- US-B1- 6 329 015

## Description

### Background of the Invention

### (1) Field of the Invention

The present invention relates to a method of working a cooling hole of a turbine blade, and more particularly to a method of working a film cooling hole which communicates with an internal cooling passage of a turbine blade from an outer surface, in the turbine blade which has a heat shield coating and the internal cooling passage.

### (2) Description of Related Art

In a gas turbine, an operating temperature becomes higher from year to year for the purpose of improving an efficiency. In order to cope with a temperature rise mentioned above, an application of a thermal barrier coating (hereinafter, refer to as TBC) made of a ceramics to a surface is carried out for the purpose of reducing a temperature of a part, in a gas turbine high-temperature part. In the gas turbine high-temperature part to which the TBC is applied, since a part temperature is held down on the basis of a heat shielding effect of the TBC in comparison with the case that the TBC is not applied, it is frequently used in a part (for example, rotor and stator blades, a combustor or the like) in which a high temperature strength is required particularly, in the gas turbine parts. Depending on a used condition, it is generally said that a base material temperature can be reduced 50 to 100 °C by applying the TBC, and it is very effective to apply the TBC to the gas turbine high-temperature part. The TBC is generally applied by forming a partly stabilized zirconia which has a low temperature conductivity and is excellent in a heat resistance as a heat shielding layer via a MCrAlY alloy layer which is excellent in an oxidation resistance, with respect to the base material (refer, for example, to Patent Document 1). In this case, M indicates at least one kind which is selected from a group constituted by Fe, Ni and Co, Cr indicates a chrome, Al indicates an aluminum, and Y indicates an yttrium.

On the other hand, for such a demand of increasing an efficiency of the gas turbine, a temperature of a combustion gas becomes higher, and a high-temperature part of the gas turbine high temperature part is increased. In order to correspond to this, in the gas turbine high-temperature part, in many cases, a cooling by a film cooling hole is used in a place to which a great heat load is applied. The cooling by the film cooling hole is achieved by spurting a part of a cooling air flowing in an internal cooling passage to a surface outside the blade from a film cooling hole which is pierced so as to communicate with an outer surface of the blade from an internal cooling passage and has a small diameter (about 0.1 to 1 mm), and is carried out by setting a plurality of film cooling holes in accordance with a specific angle and pattern, in such a manner that the spurted cooling air forms a film-like flow on an outer surface of the blade. A film cooling system is used together with the TBC.

In the case of using the film cooling system and the TBC together, there are employed a method of piercing the film cooling hole after executing the TBC, and a method of executing the TBC after piercing the film cooling hole in a blade base material. However, in the former method, it is necessary to pierce a film cooling hole which communicates from a partly stabilized zirconia ceramic film corresponding to a top coat of the TBC provided on the surface outside the blade to a blade internal cooling passage, however, since the TBC top coat is made of the ceramic, it is hard, brittle and nonconductive. Therefore, there is generated such a problem that it becomes hard to carry out a machining and an electric discharge machining which are generally used for piercing a metal base material, so that a piercing work becomes very hard. Further, in the latter method, there is such a problem that an occlusion of the cooling hole is generated by an attachment at a time of executing the TBC within the pierced film cooling hole.

With respect to these problems, there has been known a method of piercing after executing the TBC by using a laser which can pierce the ceramic, as a prior art. Further, there have been proposed a method of executing the TBC, thereafter removing the TBC top coat in accordance with an abrasive blasting only in a part in which a cooling hole is pierced, and carrying out an electric discharge machining or a laser machining (Patent Document 1, JP-A-9-136260), a method of applying a masking to a cooling hole which is pierced before executing the TBC and carrying out the TBC execution (Patent Document 2, JP-A-2003-343205), and a method of piercing a cooling hole, thereafter executing the TBC, and removing an attachment of the cooling hole by an air blasting, a water jet or the like (Patent Document 3, JP-A-2003-285269, and Patent Document 4, JP-A-2007-519530).

The document EP 1 091 090 A2 discloses a method for improving the cooling effectiveness of a fluid which flows through a row of passage holes in a turbine component, out to a high-temperature surface of the substrate, and involves forming a slot (74) over the holes within the high temperature surface. In the prior arts mentioned above, in order to further enhance an effect of the film cooling, there are a problem of a removing effect of the occlusion, a working precision or the like, and a problem of a complication of steps, a requirement of special and expensive facility or the like.

### Brief Summary of the Invention

An object of the present invention is to provide a method of executing the TBC in a turbine blade without any occlusion of a film cooling hole in accordance with a simple method.

In accordance with the present invention, there is provided a method of working a film cooling hole which communicates with an internal cooling passage of a turbine blade from an outer surface, in the turbine blade which has a heat shield coating and the internal cooling passage, the method comprising:
a step of executing a bond coat on a blade base material;
a step of piercing a cooling hole in accordance with an electric discharge machining;
a step of executing a top coat; and
a step of removing the top coat in accordance with a mechanical method with respect to a band-like region including a row of cooling holes.

In the working method in accordance with the present invention, it is preferable that an air abrasive blasting is used as the step of removing the top coat in accordance with the mechanical method with respect to the band-like region including the row of cooling holes.

In the working method in accordance with the present invention, it is preferable that a water jet method is used as the step of removing the top coat in accordance with the mechanical method with respect to the band-like region including the row of cooling holes.

Further, in accordance with the present invention, there is provided a turbine blade manufactured by using a method of working a cooling hole of a turbine blade, wherein the turbine blade has a heat shield coating, an internal cooling passage, and a film cooling hole which communicates with the internal cooling passage from an outer surface.

In accordance with the present invention, since an occlusion of the cooling hole, and a damage of the TBC due to the piercing are hardly generated in comparison with the prior art, it is possible to more simply work the blade which uses the film cooling system having a higher reliability and the TBC together, so that there can be obtained such an advantage that it is simultaneously possible to improve a reliability of the gas turbine blade and hold down a manufacturing cost.

Other objects, features and advantages of the invention will become apparent from the following description of the embodiments of the invention taken in conjunction with the accompanying drawings.

### Brief Description of the several views of the Drawing

Fig. 1 is a schematic view of a film cooling hole forming process in accordance with the present invention; and
Fig. 2 is a perspective view of a turbine rotor blade which is provided with a film cooling hole and a TBC in accordance with an embodiment of the present invention.

### Description of Reference Numerals

1 blade base material
2 bond coat layer
3 ceramic coating layer
4, 27 film cooling hole
21 blade portion
22 platform portion
23 shank portion
24 seal fin
25 tip pocket
26 dovetail

### Detailed Description of the Invention

A description will be in detail given below of the present invention by using the accompanying drawings.

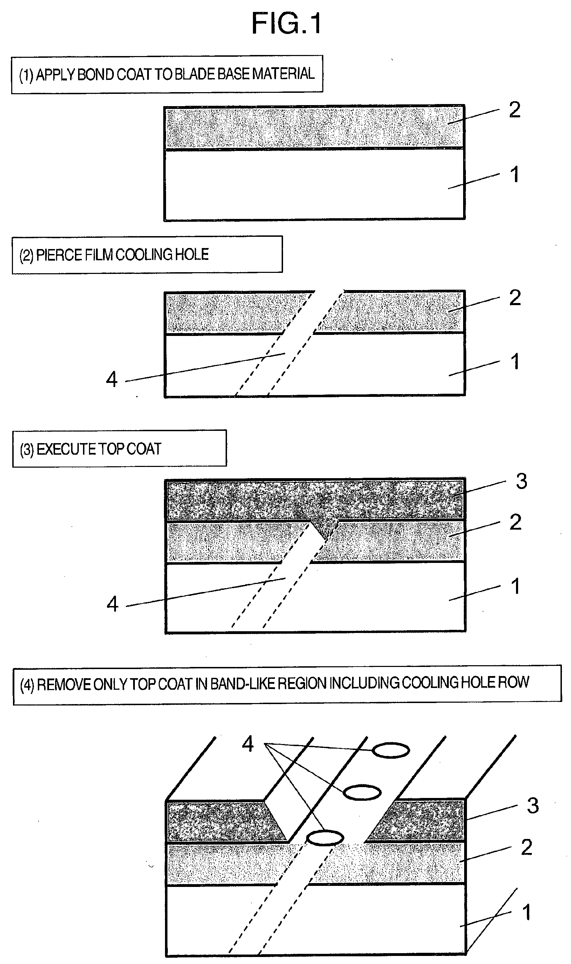

A description will be given of a film cooling hole working method of a gas turbine blade in accordance with an embodiment of the present invention with reference to Fig. 1.

In a cooling hole working method in accordance with the present embodiment shown in Fig. 1, MCrAlY alloy is coated as a bond coat on a blade base material 1 made of a Ni base heat resisting alloy, whereby a bond coat layer 2 is formed (Fig. 1-(1)). In this state, a predetermined number of film cooling holes 4 are pierced at predetermined positions in accordance with an electric discharge machining method (Fig. 1-(2)).

Further, a partly stabilized zirconia ceramic is coated as a TBC top coat after piercing the film cooling hole, whereby a ceramic coating layer 3 is formed. At this time, an inner portion of the film cooling hole, or the vicinity of an outlet of the film cooling hole comes to an occluded state by the coated zirconia ceramic (Fig. 1-(3)). Further, the attached and coated zirconia ceramic is attached to a part of the inner portion of the film cooling hole.

Thereafter, a grinding particle such as an alumina or the like is projected to a band-like region including the film cooling holes by using an air blasting apparatus or the like, thereby removing the ceramic coating layer 3 and the attachment within the film cooling hole (Fig. 1-(4)). The band-like region including one film cooling hole may include a plurality of adjacent film cooling holes.

In the removal of the ceramic coating layer 3 mentioned above, it is preferable that the blast is carried out by using an alumina particle having a particle diameter between 50 and 100 µm, setting a pneumatic pressure of the air blasting to a pressure between 1 and 5 kgf/cm², and setting a blast distance between a leading end of the air blasting nozzle and a surface of a product to a distance between 50 and 150 mm. Further, in place of the air blasting, a water jet may be employed. In the case of using the water jet, it is possible to add the grinding particle during the water jetting. In this case, it is preferable that a boundary portion between a region in which the ceramic coating layer 3 is removed, and a region in which it is left is formed as a smooth inclined surface or a curved surface shape, for avoiding a peeling and a lack of the ceramic coating layer 3. Depending on a masking method, in the case that the boundary portion between the region in which the ceramic coating layer 3 is removed and the region in which it is left is formed as a stepped shape having a sharp edge, it is preferable to apply a grinding finish to the boundary portion after the removing work of the ceramic coating layer 3.

A description will be given below of an embodiment.

### Embodiment

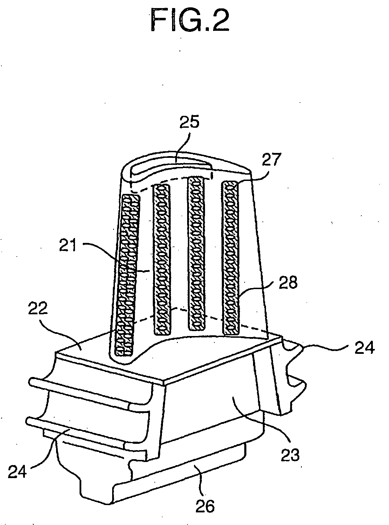

A gas turbine rotor blade provided with the film cooling hole and the TBC is manufactured by using the cooling hole working method in accordance with the present invention. A perspective view expressing a whole structure of the gas turbine rotor blade is shown in Fig. 2.

In Fig. 2, the gas turbine rotor blade is made of a Ni base heat resisting alloy (Rene80), is used, for example, as a rotor blade in a first stage of a gas turbine rotating portion provided with three stages of rotor blades, has a blade portion 21, a platform portion 22, a shank portion 23, a seal fin 24 and a tip pocket 25, and is attached to a disc via a dovetail 26.

Further, the rotor blade is structured such that a length of the blade portion is 100 mm, and a length after the platform portion 42 is 120 mm, and the rotor blade is provided with a cooling hole (not shown) from the dovetail 26 through the blade portion 21 in such a manner that a cooling medium, particularly an air or a water vapor passes therethrough so as to be cooled from an inner portion.

In this case, the TBC rotor blade is most excellent in the first stage, however, may be provided in a subsequent stage rotor blade after a second stage.

Further, a bond coat is coated to the blade portion 21 and the platform portion 22 of the gas turbine rotor blade in accordance with a plasma spray coating under a decompressed atmosphere by using a CoNiCrAlY alloy (Co - 32 wt% Ni - 21 wt% Cr - 8 wt% Al - 0.5% Y) particle, and a heat treatment of 1121 °C x 2 h + 843 °C x 24 h is executed in vacuum as a diffusion heat treatment. A thickness of the bond coat is about 200 µm.

Thereafter, predetermined number of film cooling holes 27 having a diameter of 0.8 mm are pierced at predetermined positions in the blade portion 21 in accordance with an electric discharge machining.

A bond coat layer is provided, and a porous ceramic coating layer having a thickness of about 0.5 mm and a void content of about 20 % is provided on the blade base material in which the film cooling holes are pierced, in accordance with a plasma spray coating under an ambient air, by using an yttria partially stabilized zirconia (ZrO₂ - 8wt%Y₂O₃) particle.

After executing the ceramic coating layer, most of the film cooling holes are partly or completely occluded. Thereafter, a masking using a masking tape is applied to the other portions than a band-like region including the film cooling hole having a width of 1.2 mm, along a row of the film cooling holes 27 of the blade portion 21.

Further, an alumina particle having a particle diameter between 50 and 100 µm is projected to a band-like region 28 including the film cooling holes of the width 1.2 mm to which the masking is not applied, under a pressure of a pneumatic pressure 2 kgf/cm² by an air blasting apparatus, and the ceramic coating is removed. It is confirmed that the attachment within the film cooling hole is removed after the removing process.

The cooling hole working method in accordance with the present invention is very simple and is excellent in a reliability. Therefore, it is suitable for a working method of a rotor blade and a stator blade of a gas turbine which uses the film cooling hole and the TBC together. Further, it can be applied not only to the gas turbine but also to rotor and stator blades of an aircraft engine. Further, it can be applied not only to a newly manufacturing time but also to a recoating at a time of repairing.

It should be further understood by those skilled in the art that although the foregoing description has been made on embodiments of the invention, the invention is not limited thereto and various changes and modifications may be made without departing from the scope of the appended claims.

The above embodiments of the invention as well as the appended claims and figures show multiple characterizing features of the invention in specific combinations. The skilled person will easily be able to consider further combinations or sub-combinations of these features in order to adapt the invention as defined in the in the claims to his specific needs.

## Claims

1. A method of making a film cooling hole (4, 27) which communicates with an internal cooling passage of a turbine blade from an outer surface, in a turbine blade which has a heat shield coating (3) and an internal cooling passage, the method comprising, in the following order:
a step of executing a bond coat (2) on a blade base material (1);
a step of piercing a cooling hole (4, 27) in accordance with an electric discharge machining;
a step of executing a top coat (3); and
a step of removing the top coat in accordance with a mechanical method with respect to a band-like region including a row of cooling holes.

2. A method of making a film cooling hole of a turbine blade as claimed in claim 1, wherein an air abrasive blasting is used as the step of removing the top coat in accordance with the mechanical method with respect to the band-like region including the row of cooling holes.

3. A method of making a film cooling hole of a turbine blade as claimed in claim 1, wherein a water jet method is used as the step of removing the top coat in accordance with the mechanical method with respect to the band-like region including the row of cooling holes.

4. A turbine blade comprising:
a heat shield coating (3); and
an internal cooling passage,
wherein said turbine blade has a film cooling hole (4, 27) communicating with said internal cooling passage from an outer surface, and
wherein said film cooling hole is manufactured by the method of making the cooling hole of the turbine blade as claimed in one of claims 1 - 3.

## Patentansprüche

1. Verfahren zum Einarbeiten einer Film-Kühlungsöffnung (4, 27), die von einer äußeren Oberfläche mit einem inneren Kühlkanal einer Turbinenschaufel verbunden ist, in eine Turbinenschaufel, welche eine Wärmeabschirmungsbeschichtung (3) und einen inneren Kühlkanal umfasst, wobei das Verfahren in der folgenden Reihenfolge umfasst:
einen Schritt des Aufbringens einer Haftbeschichtung (2) auf ein Schaufelgrundmaterial (1);
einen Schritt, in dem mittels Elektroerosion eine Kühlungsöffnung (4, 27) durchgestochen wird;
einen Schritt des Aufbringens einer oberen Beschichtung; und
einen Schritt, in welchem mittels eines mechanischen Verfahrens die obere Beschichtung in einem bandförmigen Bereich, der eine Reihe von Kühlungsöffnungen umfasst, entfernt wird.

2. Verfahren zum Einarbeiten einer Film-Kühlungsöffnung nach Anspruch 1, wobei als der Schritt der Entfernung der oberen Beschichtung nach dem mechanischen Verfahren in dem bandförmigen Bereich, der eine Reihe von Kühlungsöffnungen umfasst, ein Luft-Strahlmittel-Strahlverfahren verwendet wird.

3. Verfahren zum Einarbeiten einer Film-Kühlungsöffnung nach Anspruch 1, wobei als der Schritt der Entfernung der oberen Beschichtung nach dem mechanischen Verfahren in dem bandförmigen Bereich, der eine Reihe von Kühlungsöffnungen umfasst, ein Wasserstrahlverfahren verwendet wird.

4. Turbinenschaufel, umfassend:
eine Wärmeabschirmungsbeschichtung (3); und
einen inneren Kühlkanal,
wobei die Turbinenschaufel eine Film-Kühlungsöffnung (4, 27) umfasst, die die von einer äußeren Oberfläche mit dem inneren Kühlkanal verbunden ist, und
wobei die Film-Kühlungsöffnung gemäß dem Verfahren zum Einarbeiten einer Film-Kühlungsöffnung der Turbinenschaufel nach einem der Ansprüche 1 - 3 hergestellt ist.

## Revendications

1. Procédé de fabrication d'un trou de refroidissement de film (4, 27) qui communique avec un passage de refroidissement interne d'une aube de turbine depuis une surface extérieure, dans une aube de turbine qui a un revêtement de protection contre la chaleur (3) et un passage de refroidissement interne, le procédé comprenant, dans l'ordre suivant :
une étape d'exécution d'une couche de liaison (2) sur un matériau de base (1) d'aube ;
une étape de perçage d'un trou de refroidissement (4, 27) conformément à un usinage par décharge électrique ;
une étape d'exécution d'une couche supérieure (3) ; et
une étape de suppression de la couche supérieure conformément à un procédé mécanique par rapport à une région de type bande incluant une rangée de trous de refroidissement.

2. Procédé de fabrication d'un trou de refroidissement de film d'une aube de turbine selon la revendication 1, dans lequel un sablage abrasif à l'air est utilisé comme l'étape de suppression de la couche supérieure conformément au procédé mécanique par rapport à la région de type bande incluant la rangée de trous de refroidissement.

3. Procédé de fabrication d'un trou de refroidissement de film d'une aube de turbine selon la revendication 1, dans lequel un procédé au jet d'eau est utilisé comme l'étape de suppression de la couche supérieure conformément au procédé mécanique par rapport à la région de type bande incluant la rangée de trous de refroidissement.

4. Aube de turbine comprenant :
un revêtement de protection contre la chaleur (3) ; et
un passage de refroidissement interne,
dans lequel ladite aube de turbine a un trou de refroidissement de film (4, 27) communiquant avec ledit passage de refroidissement interne depuis une surface extérieure, et
dans lequel ledit trou de refroidissement de film est fabriqué par le procédé de fabrication du trou de refroidissement de l'aube de turbine selon l'une des revendications 1 - 3.
